# EUROPÄISCHE PATENTSCHRIFT

(11) **EP 0 988 172 B1**
(45) Veröffentlichungstag und Bekanntmachung des Hinweises auf die Patenterteilung: **09.01.2002**
(21) Anmeldenummer: 98934963.4
(22) Anmeldetag: 16.06.1998
(51) Int. Cl.: B60N 2/48

(54) **FAHRZEUGSITZ MIT VERSCHIEBBARER KOPFSTÜTZE**
CAR SEAT WITH DISPLACEABLE HEADREST
SIEGE DE VEHICULE AVEC APPUI-TETE REGLABLE

(30) Priorität: 16.06.1997 DE 29710511 U; 10.11.1997 DE 29719937 U
(43) Veröffentlichungstag der Anmeldung: 29.03.2000
(73) Patentinhaber: TRW Occupant Restraint Systems GmbH & Co. KG, 73551 Alfdorf (DE)
(72) Erfinder: HEILIG, Alexander, D-73550 Wissgoldingen (DE)
(74) Vertreter: Sties, Jochen, Dipl.-Ing.
(86) Internationale Anmeldenummer: EP9803624
(87) Internationale Veröffentlichungsnummer: WO9857820

(56) Entgegenhaltungen:
- EP-A- 0 593 845
- DE-A- 4 231 523
- DE-A- 19 614 314
- GB-A- 2 102 656
- US-A- 5 324 071
- PATENT ABSTRACTS OF JAPAN vol. 016, no. 114 (C-0921), 23. März 1992 & JP 03 286713 A (SUZUKI MOTOR CORP), 17. Dezember 1991

## Beschreibung

Die Erfindung betrifft einen Fahrzeugsitz mit einer Rückenlehne und einer Kopfstütze gemäß dem Oberbegriff des Anspruchs 1.

Die Kopfstütze verhindert unter anderem im Falle eines Heckaufpralls, daß der Kopf eines Fahrzeuginsassen relativ zum Fahrzeug nach hinten geschleudert wird. Um ihre Rückhaltewirkung optimal entfalten zu können, muß die Kopfstütze geeignet an die Stellung des Kopfes des Fahrzeuginsassen bezüglich der Rückenlehne angepaßt werden, insbesondere in der Höhe. Zu diesem Zweck ist die Kopfstütze mittels üblicherweise zweier Führungsstangen verschiebbar an der Rückenlehne angebracht.

In jüngster Zeit dient die Kopfstütze auch vermehrt zur Aufnahme von verschiedenen Arten von Funktionseinheiten, wie z.B. eine mit einem Gasgenerator versehene Rückhalteeinrichtung, die bei einem Unfall für eine aktive Verstellung der Kopfstütze sorgen kann oder einen Gassack aktiviert, der den Kopf des Fahrzeuginsassen zurückhalten kann. Diese Funktionseinheiten müssen insbesondere im Fall einer bei einem Fahrzeugunfall zu aktivierenden Einheit mit besonders hoher Zuverlässigkeit an eine Basiseinheit angeschlossen werden, beispielsweise eine Aktivierungsvorrichtung für den Gasgenerator. Problematisch ist insbesondere, die Verbindung der Funktionseinheit mit der Basiseinheit zuverlässig über den gesamten möglichen Verstellbereich der Kopfstütze bei den möglichen Extrembedingungen zu gewährleisten, die eintreten können, nämlich einerseits bei einer Kopfstütze, die im Verlauf ihrer Lebensdauer extrem häufig verstellt wird, und andererseits bei einer Kopfstütze, die im Verlauf ihrer Lebensdauer immer in einer einmal gewählten Stellung verbleibt.

Aus der JP-A-03 286 713 ist ein gattungsgemäßer Fahrzeugsitz bekannt, bei dem elektrische Signale einer akustischen Vorrichtung, beispielsweise eines Verstärkers eines Autoradios, über die Führungsstangen, mit denen die Kopfstütze an der Rückenlehne angebracht ist, zu einem Steckverbinderteil in der Kopfstütze geführt werden.

Es ist Aufgabe der Erfindung, vorteilhafte Alternativen für die Nutzung der Führungsstangen zum elektrischen Anschließen einer in der Kopfstütze angeordneten Funktionseinheit mit einer außerhalb der Kopfstütze angeordneten Basiseinheit anzugeben.

Gemäß der Erfindung wird zwischen der Funktionseinheit und der Basiseinheit die notwendige zuverlässige Verbindung bei einem Fahrzeugsitz der eingangs genannten Art dadurch gewährleistet, daß im unteren, in die Rückenlehne eingeschobenen Ende der Führungsstange ein Steckverbindungsteil angeordnet ist, das in ein komplementäres Steckverbindungsteil in der Rückenlehne eingreift. Im Gegensatz zu bisher angedachten Lösungen, bei denen die Funktionseinheit ferngesteuert, also ohne direkte elektrische Verbindung zur Basiseinheit, gesteuert oder aktiviert wird, läßt sich durch die Verwendung der Führungsstange eine Verbindung der Funktionseinheit mit der Basiseinheit erzielen, die sehr funktionssicher ist. Die elektrische Verbindung kann jedoch nicht nur zur Ansteuerung eines Gasgenerators, sondern auch zur Ansteuerung anderer in der Kopfstütze untergebrachten Einheiten, z.B. Lautsprechern eines Mobilfunktelefons, dienen. Die Verwendung einer Steckverbindung ermöglicht es, die Funktionseinheit beim Einsetzen der Rückenlehne in die Schiebeführung quasi automatisch mit der Basiseinheit zu verbinden oder beim Entfernen der Kopfstütze von der Basiseinheit zu trennen, wenn die beiden Steckverbindungsteile der Steckverbindung geeignet angeordnet sind. Ferner kann die Kopfstütze auch ohne Mehraufwand komplett vom Sitz getrennt werden.

Gemäß einer bevorzugten Ausführungsform der Erfindung ist vorgesehen, daß die Führungsstange als Führung für ein Kabel dient, mit dem die Funktionseinheit an die Basiseinheit angeschlossen wird. Auf diese Wcise läßt sich eine gegen mechanische Einflüsse sehr sichere Verbindung zwischen der Funktionscinheit und der Basiseinheit erzielen.

Gemäß der bevorzugten Ausführungsform ist weiterhin vorgesehen, daß das in der Führungsstange angeordnete Steckverbindungsteil relativ zu dieser feststehend ist und daß das in der Rückenlehne angeordnete Steckverbindungsteil relativ zur Schiebeführung verschiebbar ist. Bei dieser Gestaltung folgt das in der Rückenlehne angeordnete Steckverbindungsteil den Bewegungen des in der Führungsstange und somit an der Kopfstütze angeordneten Steckverbindungsteils, so daß die Verstellmöglichkeit für die Kopfstütze in keiner Weise beeinträchtigt ist.

Gemäß dieser bevorzugten Ausführungsform ist weiterhin vorgesehen, daß das in der Rückenlehne angeordnete Steckverbindungsteil von einer Feder zum oberen Ende der Rückenlehne hin beaufschlagt wird. Das in der Rückenlehne angeordnete Steckverbindungsteil wird also immer zu dem in der Führungsstange angeordneten Steckverbindungsteil beaufschlagt, so daß ein unbeabsichtigtes Lösen der Steckverbindung verhindert ist.

Gemäß dieser bevorzugten Ausführungsform der Erfindung ist weiterhin vorgesehen, daß die Feder das in der Rückenlehne angeordnete Steckverbindungsteil mit einer Kraft beaufschlagt, die größer ist als die Kraft, die zum Verrasten der beiden Steckverbindungsteile miteinander notwendig ist. Auf diese Weise wird gewährleistet, daß bei der Montage der Kopfstütze an der Rückenlehne die beiden Steckverbindungsteile mittels der Kraft sicher miteinander verbunden werden, die zum Überwinden der Feder und zum Herunterdrücken des in der Rückenlehne angeordneten Steckverbindungsteils durch das in der Führungsstange angeordnete Steckverbindungsteil notwendig ist. Darüber hinaus kann selbstverständlich das verschiebbare Steckverbindungsteil auch in der Führungsstange und das feststehende Steckverbindungsteil in der Schiebeführung angebracht sein. Ferner ist es möglich, eine Einrichtung vorzusehen, die erst nach Schließen der Steckverbindung ein weiteres Einschieben der Führungsstange in die Schiebeführung erlaubt. Damit soll ausgeschlossen werden, daß die Führungsstange tief in die Schiebeführung eingeführt wird, obwohl die Steckverbindung nicht zustandegekommen ist.

Vorteilhafte Ausgestaltungen der Erfindung ergeben sich aus den Unteransprüchen.

Die Erfindung wird nachfolgend unter Bezugnahme auf die beigefügten Zeichnungen beschrieben. In diesen zeigen:
- Fig. 1 eine perspektivische Explosionsansicht einer Kopfstütze als Teil des erfindungsgemäßen Fahrzeugsitzes;
- Fig. 2 schematisch einen Längsschnitt durch eine Führungsstange und die zugeordnete Schiebeführung gemäß einer ersten Ausführungsform der Erfindung; und
- Fig. 3 schematisch einen Längsschnitt durch eine Führungsstange und die zugeordnete Schiebeführung gemäß einer zweiten Ausführungsform der Erfindung.

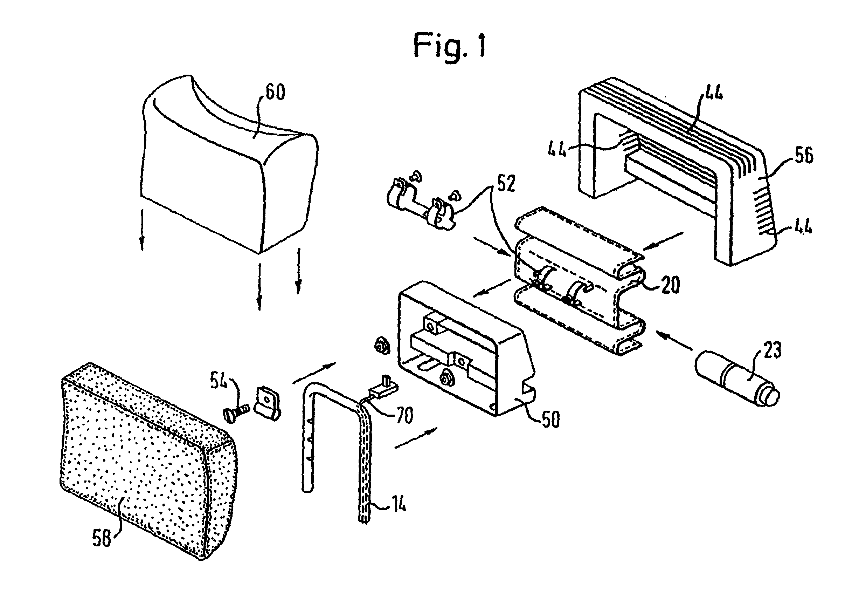

In Fig. 1 ist schematisch eine Kopfstütze gezeigt, die als Teil eines erfindungsgemäßen Fahrzeugsitzes verwendet werden kann. Die Kopfstütze enthält ein vorderes Polsterteil 56 und ein hinteres Polsterteil 58, über die ein Stoffbezug 60 gestülpt werden kann. Zwischen den Polstern ist ein Körper 50 angeordnet, der die beiden Polsterteile trägt und mittels zweier Führungsstangen, die als U-förmiges Führungsteil 14 ausgebildet sind, mit einer (nicht dargestellten) Rückenlehne eines Fahrzeugsitzes verbunden werden kann. An dem Körper 50 ist mittels einer Klemmschelle 52 und einer Schrauben- und Klipp-Verbindung 54 ein Gasgenerator 23 sowie ein Gassack 20 angebracht. Die spezielle Ausgestaltung des Gasgenerators und des Gassacks sind hier ohne Belang; relevant ist lediglich, daß die aus dem Gassack und dem Gasgenerator gebildete Funktionseinheit mittels des schematisch dargestellten Kabels 70 an eine (nicht dargestellte) Basiseinheit angeschlossen werden kann, die im vorliegenden Fall den Gasgenerator bei Bedarf aktivieren kann.

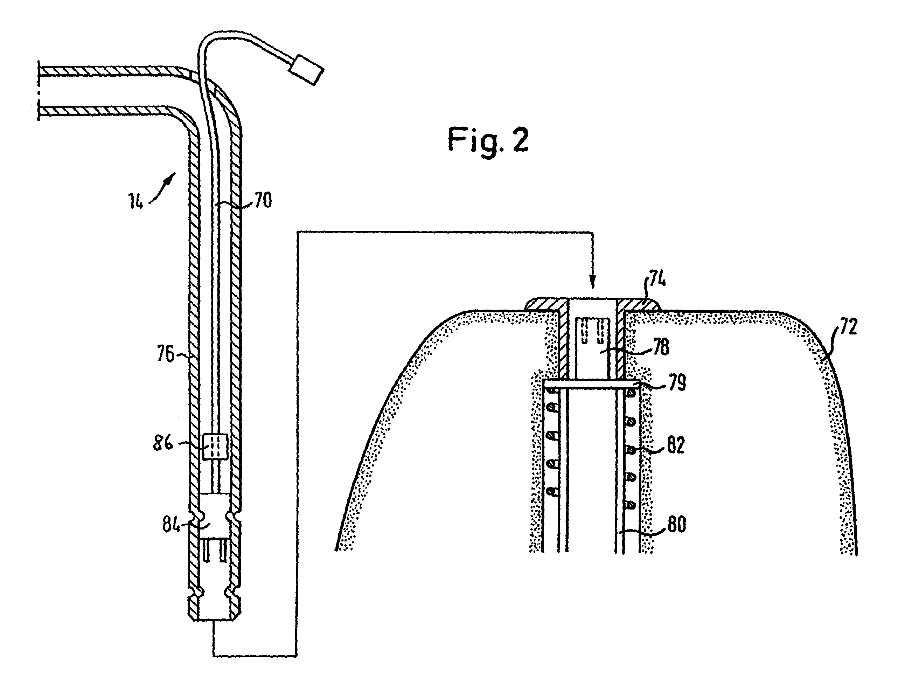

In Fig. 2 ist schematisch der obere Abschnitt einer Rückenlehne 72 eines Fahrzeugsitzes gezeigt. An der Rückenlehne ist eine Schiebeführung 74 vorgesehen, in die eine Führungsstange 76 des U-förmigen Führungsteils 14 für die Kopfstütze eingesetzt werden kann. Unterhalb der Schiebeführung 74 ist ein Steckverbindungsteil 78 angeordnet, das in einem Rohr 80 verschiebbar aufgenommen ist. Das Steckverbindungsteil 78 wird mittels einer Feder 82 zur Schiebeführung 74 hin in eine Ruhestellung beaufschlagt. Das Steckverbindungsteil 78 kann im Rohr 80 über einen solchen Weg bewegt werden, daß der mögliche Verstellbereich der Kopfstütze nicht beeinträchtigt ist. Zur Festlegung der Ausrichtung des Steckverbindungsteils 78 in Umfangsrichtung ragen radiale Fortsätze 79 der Basis durch Schlitze im Rohr 80. Im oberen Bereich ist das Rohr 80 zur Bildung eines oberen Anschlags nicht mehr geschlitzt.

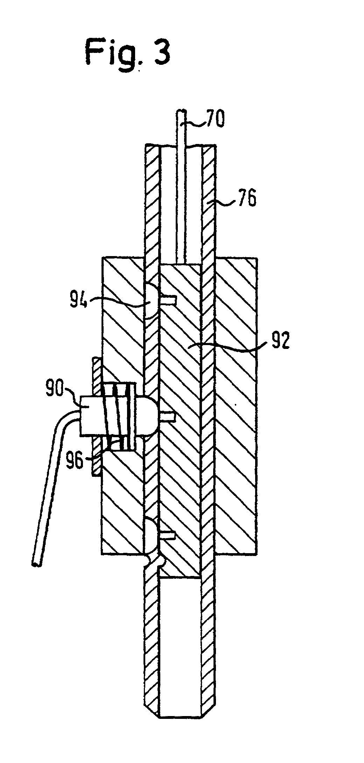

In das hohle Innere der Führungsstange 76 ist ein Steckverbindungsteil 84 eingeschoben und durch Verpressen mit der Führungsstange 76 verbunden, wobei das Steckverbindungsteil 84 zum Steckverbindungsteil 78 komplementär ist. Wenn die beiden Steckverbindungsteile 78, 84 ineinander eingreifen, ist eine elektrische Steckverbindung gebildet. Mit dem Steckverbindungsteil 84 ist das aus Fig. 1 bekannte Kabel 70 verbunden. Unmittelbar, von der Kopfstütze aus gesehen vor der elektrischen Kontaktstelle ist eine sogenannte intelligente Peripherieeinheit 86 in der durch das Kabel 70 gebildeten elektrischen Leitung zwischengeschaltet. Die Peripherieeinheit 86 stellt eine Verbindung zu einem sogenannten Datenbussystem dar, welches eine Verbindung zur Basiscinheit hat und über welches Daten, z.B. Daten, die am Zünder des Gasgenerators 23 erfaßt werden, zur Basiseinheit weitergibt und auch für einen umgekehrten Signalaustausch sorgt. Allgemeiner gesagt kann die Peripherieeinheit 86 unmittelbar vor oder nach einer elektrischen Kontaktstelle zwischen den elektrischen Leitungsabschnitten, die der Führungsstange 76 und der Schiebeführung 74 zugeordnet sind, angeordnet sein. Mit elektrischer Kontaktstelle ist dabei die in Figur 2 gezeigte Steckverbindung oder die anhand von Figur 3 noch näher beschriebene elektrische Verbindung gemeint.

Die Verbindung zwischen der Basiseinheit und der in der Kopfstütze angeordneten Funktionseinheit wird bei der Anbringung der Kopfstütze an der Rückenlehne automatisch hergestellt. Die Vorspannkraft der Feder 82 ist nämlich so gewählt, daß erst die zum Verrasten der Steckverbindungsteile 78 und 84 miteinander notwendige Kraft überwunden wird, bevor das Steckverbindungsteil 78 aus der Ruhelage heraus bewegt wird. Beim Einsetzen der Führungsstange 76 in die Schiebeführung 74 wird das Steckverbindungsteil 84 automatisch gegenüber dem Steckverbindungsteil 78 positioniert, das von der Feder 82 in die in Fig. 2 gezeigte Ruhestellung beaufschlagt wird. Wenn dann die Führungsstange 76 in die Schiebeführung eingedrückt wird, werden die beiden Steckverbindungsteile 78, 84 ineinandergesteckt.

Die Steckverbindung ermöglicht es auch, die Kopfstütze aus der Rückenlehne vollständig herauszunehmen. Dabei wird automatisch die Steckverbindung gelöst. Sobald die Kopfstütze wieder in die Rückelehne eingesteckt wird, ergibt sich wieder die Verbindung zwischen der Funktionseinheit und der Basiseinheit.

In Fig. 3 ist schematisch ein Detail einer zweiten Ausführungsform der Erfindung gezeigt. Für die Verbindung zwischen der Basiseinheit und der Funktionseinheit wird hier ein Kontaktstift 90 verwendet, der mit einem Kontaktelement 92 in elektrischer Berührung steht, das in der Führungsstange 76 angeordnet ist. In der Führungsstange 76 und dem Kontaktelement 92 sind Aussparungen 94 vorgesehen, die zusammen mit dem Kontaktstift 90, der mittels einer Feder 96 zum Kontaktelement 92 hin beaufschlagt wird, zur Arretierung der Kopfstütze in verschiedenen Höhen dienen. Bei dieser Ausgestaltung sind ein Kontaktstift 90 und ein Kontaktelement 92 vorzugsweise in jeder der beiden Führungsstangen 76 vorgesehen, so daß eine Hin- und eine Rückleitung zur Funktionseinheit zur Verfügung stehen.

Gemäß einer in den Zeichnungen nicht dargestellten Weiterbildung kann die Führungsstange 76 gleichzeitig als Gehäuse für einen Gasgenerator dienen, der dafür vorgesehen ist, mit dem Gassack 20 zusammenzuwirken. Dieser Gasgenerator kann mehrteilig ausgeführt sein, so daß nach dessen Aktivierung nur ein Teil ersetzt werden muß.

## Patentansprüche

1. Fahrzeugsitz mit einer Rückenlehne (72), in der eine Schiebeführng (74) vorgesehen ist, und einer Kopfstütze, die mittels mindestens einer in die Schiebeführung (74) eingesetzten Führungsstange (76) an der Rückenlehne (72) angebracht ist und mit einer Funktionseinheit (20, 23) versehen ist, die elektrisch mit einer außerhalb der Kopfstütze angeordneten Basiseinheit verbindbar ist, wobei die Führungsstange (76) verstellbar an der Rückenlehne (72) angebracht ist und zum elektrischen Anschließen der Funktionseinheit (20, 23) verwendet wird, **dadurch gekennzeichnet, daß** im unteren, in die Rückenlehne (72) eingeschobenen Ende der Führungsstange (76) ein Steckverbindungsteil (84) angeordnet ist, das in ein komplementäres Steckverbindungsteil (78) in der Rückenlehne (72) eingreift.

2. Fahrzeugsitz nach Anspruch 1, **dadurch gekennzeichnet, daß** die Führungsstange (76) als Führung für ein Kabel (70) dient, mit dem die Funktionseinheit (20, 23) an die Basiseinheit angeschlossen wird.

3. Fahrzeuesitz nach Anspruch 1 oder 2, **dadurch gekennzeichnet, daß** eines der Steckverbindungsteile (84) relativ zur Führungsstange (76) feststehend ist und daß das andere Steckverbindungsteil (78) beim Einstecken der Führungsstange (76) in die Schiebeführung (74) nach Kopplung der Steckverbindungsteile (78, 84) verschoben wird.

4. Fahrzeugsitz nach Anspruch 3, **dadurch gekennzeichnet, daß** das verschiebbare Steckverbindungsteil (78) von einer Feder (82) in eine Grundstellung hin beaufschlagt wird.

5. Fahrzeugsitz nach Anspruch 4, **dadurch gekennzeichnet, daß** die Feder (82) das verschiebbare Steckverbindungsteil (78) mit einer Kraft beaufschlagt, die größer ist als die Kraft, die zum Verrasten der beiden Steckverbindungsteile (78, 84) miteinander notwendig ist.

6. Fahrzeugsitz nach Anspruch 4 oder 5, **dadurch gekennzeichnet, daß** die Feder (82) einen Verstellweg des verschiebbaren Steckverbindungsteils (78) ermöglicht, der mindestens so groß ist wie der mögliche Verstellweg der Kopfstütze.

7. Fahlzeugsitz nach einem der Ansprüche 4 bis 6, **dadurch gekennzeichnet, daß** das verschiebbare Steckverbindungsteil (78) in der Schiebeführung (74) angeordnet ist.

8. Fahrzeugsitz nach einem der Ansprüche 4 bis 7, **dadurch gekennzeichnet, daß** eine Einrichtung vorgesehen ist, die erst nach Schließen der Steckverbindung ein weiteres Verschieben der Führungsstange (76) in die Schiebeführung (74) erlaubt.

9. Fahrzeugsitz nach einem der vorhergehenden Ansprüche, **dadurch gekennzeichnet, daß** die Führungsstange (76) als Gehäuse für einen Gasgenerator dient.

10. Fahrzeugsitz nach Anspruch 9, **dadurch gekennzeichnet, daß** der Gasgenerator mehrteilig ausgeführt ist, so daß nach dessen Aktivierung nur ein Teil ersetzt werden muß.

11. Fahrzeugsitz nach einem der vorhergehenden Ansprüche, **dadurch gekennzeichnet, daß** eine intelligente Peripherieeinheit (86) als Verbindung zu einem Datenbussystem in der Führungsstange (76) oder der Schiebeführung (74) angeordnet ist.

12. Fahrzeugsitz nach Anspruch 11, **dadurch gekennzeichnet, daß** die Peripherieeinheit (86) unmittelbar vor oder nach einer elektrischen Kontaktstelle zwischen den elektrischen Leitungsabschnitten, die der Führungsstange (76) und der Schiebeführung (74) zugeordnet sind, angeordnet ist.

## Claims

1. A vehicle seat with a back rest (72) in which a sliding guide (74) is provided, and with a headrest which is fixed to the back rest (72) by means of at least one guide rod (76) inserted into the sliding guide (74) and is provided with a functional unit (20, 23) which is connectable electrically with a base unit arranged outside the headrest, the guide rod (76) being arranged adjustably on the back rest (72) and being used for the electrical connection of the functional unit (20, 23), **characterized in that** in the lower end of the guide rod (76), pushed into the back rest (72), a plug connection element (84) is arranged which engages into a complementary plug connection element (78) in the back rest (72).

2. The vehicle seat according to Claim 1, **characterized in that** the guide rod (76) serves as guide for a cable (70) by which the functional unit (20, 23) is connected to the base unit.

3. The vehicle seat according to Claim 1 or 2, **characterized in that** one of the plug connection elements (84) is stationary in relation to the guide rod (76) and that the other plug connection element (78), on insertion of the guide rod (76) into the sliding guide (74), is displaced after coupling action of the plug connection elements (78, 84).

4. The vehicle seat according to Claim 3, **characterized in that** the displaceable plug connection element (78) is biased into a basic position by a spring (82).

5. The vehicle seat according to Claim 4, **characterized in that** the spring (82) acts on the displaceable plug connection element (78) with a force which is greater than the force which is necessary for the engagement of the two plug connection elements (78, 84) with each other.

6. The vehicle seat according to Claim 4 or 5, **characterized in that** the spring (82) allows a displacement path of the displaceable plug connection element (78) which is at least as long as the possible displacement path of the headrest.

7. The vehicle seat according to any of Claims 4 to 6, **characterized in that** the displaceable plug connection element (78) is arranged in the sliding guide (74).

8. The vehicle seat according to any of Claims 4 to 7, **characterized in that** a device is provided which permits a further displacement of the guide rod (76) into the sliding guide (74) only after closing of the plug connection.

9. The vehicle seat according to any of the preceding claims, **characterized in that** the guide rod (76) serves as housing for a gas generator.

10. The vehicle seat according to Claim 9, **characterized in that** the gas generator is constructed in several parts so that after its activation only one part has to be replaced.

11. The vehicle seat according to any of the preceding claims, **characterized in that** an intelligent periphery unit (86) as a connection to a data bus system is arranged in the guide rod (76) or in the sliding guide (74).

12. The vehicle seat according to Claim 11, **characterized in that** the periphery unit (86) is arranged directly before or after an electrical contact point between the electrical line sections which are associated with the guide rod (76) and with the sliding guide (74).

## Revendications

1. Siège de véhicule avec un dossier (72) dans lequel est prévu un guidage coulissant (74), et avec un appui-tête qui est monté sur le dossier (72) au moyen d'au moins une barre de guidage (76) insérée dans le guidage coulissant (74) et qui est pourvu d'une unité fonctionnelle (20, 23) qui peut être connecté électriquement avec une unité de base agencée en dehors de l'appui-tête, la barre de guidage (76) étant montée ajustable sur le dossier (72) et étant utilisée pour connecter électriquement l'unité fonctionnelle (20, 23), **caractérisé en ce que** dans l'extrémité inférieure de la barre de guidage (76), qui est enfilée dans le dossier (72), est agencé un élément de connexion par fiches (84) qui s'engage dans un élément de connexion par fiches (78) complémentaire dans le dossier (72).

2. Siège de véhicule selon la revendication 1, **caractérisé en ce que** la barre de guidage (76) sert de guidage à un câble (70) avec lequel l'unité fonctionnelle (20, 23) est connecté à l'unité de base.

3. Siège de véhicule selon la revendication 1 ou 2, **caractérisé en ce que** l'un des éléments de connexion par fiches (84) est stationnaire par rapport à la barre de guidage (76) et **en ce que** lorsqu'on introduit la barre de guidage (76) dans le guidage coulissant (74) l'autre élément de connexion par fiches (78) est déplacé après avoir couplé les éléments de connexion par fiches (78, 84).

4. Siège de véhicule selon la revendication 3, **caractérisé en ce que** l'élément de connexion par fiches (78) déplaçable est sollicité par un ressort (82) dans une position de base.

5. Siège de véhicule selon la revendication 4, **caractérisé en ce que** le ressort (82) sollicite l'élément de connexion par fiches (78) déplaçable avec une force qui est supérieure à la force qui est nécessaire pour enclencher l'un dans l'autre les deux éléments de connexion par fiches (78, 84).

6. Siège de véhicule selon la revendication 4 ou 5, **caractérisé en ce que** le ressort (82) permet une course de déplacement de l'élément de connexion par fiches (78) qui est au moins aussi longue que la course de déplacement possible de l'appui-tête.

7. Siège de véhicule selon l'une quelconque des revendications 4 à 6, **caractérisé en ce que** l'élément de connexion par fiches (78) est agencé dans le guidage coulissant (74).

8. Siège de véhicule selon l'une quelconque des revendications 4 à 7, **caractérisé en ce qu'**il est prévu un dispositif qui ne permet de déplacer plus loin la barre de guidage (76) dans le guidage coulissant (74) qu'après avoir fermé la connexion par fiches.

9. Siège de véhicule selon l'une quelconque des revendications précédentes, **caractérisé en ce que** la barre de guidage (76) sert de boîtier à un générateur de gaz.

10. Siège de véhicule selon la revendication 9, **caractérisé en ce que** le générateur de gaz est réalisé en plusieurs parties de sorte qu'une partie seulement doit être remplacée après son activation.

11. Siège de véhicule selon l'une quelconque des revendications précédentes, **caractérisé en ce qu'**une unité périphérique (86) intelligente est agencée pour établir la connexion avec un système de bus de données dans la barre de guidage (76) ou dans le guidage coulissant (74).

12. Siège de véhicule selon la revendication 11, **caractérisé en ce que** l'unité périphérique (86) est agencée directement en amont ou en aval d'un point de contact électrique entre les tronçons de ligne électriques qui sont associés à la barre de guidage (76) et au guidage coulissant (74).
